# FASCICULE DE BREVET EUROPEEN

(11) **EP 2 480 959 B1**
(45) Date de publication et mention de la délivrance du brevet: **26.02.2020**
(21) Numéro de dépôt: 10755173.1
(22) Date de dépôt: 21.09.2010
(51) Int. Cl.: G06F 3/048, G06F 3/0483

(54) **TERMINAL FIXE OU MOBILE PILOTÉ PAR UN PÉRIPHÉRIQUE DE POINTAGE OU DE SAISIE**
ÜBER EIN ZEIGE- ODER EINGABEPERIPHERIEGERÄT GESTEUERTES STATIONÄRES ODER MOBILES ENDGERÄT
STATIONARY OR MOBILE TERMINAL CONTROLLED BY A POINTING OR INPUT PERIPHERAL

(30) Priorité: 23.09.2009 FR 0956577
(43) Date de publication de la demande: 01.08.2012
(73) Titulaire: Milibris, 75002 Paris (FR)
(72) Inventeur: MONTEUX, Guillaume, F-75009 Paris (FR); RUCINE, Nicolas, F-44300 Nantes (FR); MONROUZEAU, Raphaël, F-94700 Maisons Alfort (FR); VAUVILLIER, Luc, F-95130 Le Plessis-Bouchard (FR)
(74) Mandataire: Lebkiri, Alexandre
(86) Numéro de dépôt international: PCT/EP2010/063850
(87) Numéro de publication internationale: WO 2011/036138

(56) Documents cités:
- EP-A2- 1 621 988
- US-A- 5 900 876
- US-A1- 2002 113 823
- US-A1- 2006 197 782
- US-A1- 2008 235 563
- US-A1- 2009 058 822
- US-B1- 6 486 895

## Description

### DOMAINE TECHNIQUE DE L'INVENTION

La présente invention concerne un terminal fixe ou mobile apte à être piloté par un périphérique de pointage ou de saisie. L'invention se situe dans le domaine des IHM (Interfaces Homme Machine), appliquées à la lecture en numérique.

### ARRIERE PLAN TECHNOLOGIQUE DE L'INVENTION

La lecture en numérique a les mêmes exigences que la manipulation du document papier. Le lecteur doit pouvoir feuilleter, lire en détail, et se repérer facilement. Pour répondre à ces besoins, les applications ou services Internet de lecture proposent des outils (vue zoom, vignettes) toujours présentés en marge du document lui-même. L'expérience utilisateur reste très limitée dans la présentation du contenu de type presse/magazine/livre.

Le feuilletage du document présenté en double page est utilisé dans la quasi-totalité des cas, il est fréquent de se voir proposer un outil de zoom sur une version haute définition de la page, et certaines solutions comportent une grille de vignettes fixes permettant de sélectionner la nouvelle page à afficher. Ces outils restent séparés les uns des autres dans leur présentation et manipulation.

Un contenu de type presse/magazine/livre est présenté de façon sommaire dans les solutions existantes, et peine à attirer le lecteur vers de nouveaux supports faute d'outils pensés pour lui. L'idée est de concevoir un mode de lecture aussi fluide que possible tirant partie des possibilités de présentation d'un document numérique.

### DESCRIPTION GENERALE DE L'INVENTION

Dans ce contexte, la présente invention vise à fournir un terminal fixe ou mobile dont l'enjeu est de reproduire en terme d'usage la sensation de lecture papier sur écran, de développer de nouveaux modes de lecture et de permettre à aux groupes de presse de pouvoir dématérialiser leurs publications en faisant abstraction des contraintes matérielles et techniques des différents terminaux de lecture.

A cette fin, l'invention propose un terminal fixe ou mobile apte à être piloté par un périphérique de pointage ou de saisie caractérisé en ce qu'il comporte
- des moyens de mémorisation sur lesquels une pluralité de pages est stockée ;
- des moyens d'affichage de la pluralité des pages stockées disposées sous la forme d'une grille dite chemin de fer, chaque élément dudit chemin de fer étant composé soit du recto ou du verso d'une page dite simple page, soit du recto d'une page et du verso d'une autre page accolés dits double page, l'ensemble desdits éléments étant ordonnés par défaut dans le sens ascendant des pages ;
- des moyens d'affichage d'une vue dite feuilletage composée de deux piles de pages recto verso respectivement dites pile de gauche et pile de droite et ordonnées respectivement dans le sens ascendant et descendant, ou d'une seule pile contenant l'intégralité des pages recto verso, ordonnées dans le sens ascendant ou descendant, le tout appartenant à la pluralité des pages stockées ;
- des moyens de commande desdits moyens d'affichage comportant :
   ∘ des moyens de détection de l'interaction utilisateur au moyen d'une souris et/ou d'un clavier, comprenant la détection du positionnement et des mouvements d'un curseur, de la pression et du relâchement d'un bouton, du sens et de l'amplitude d'un mouvement de molette, et de la pression simple, maintenue ou répétée d'une ou plusieurs touches simultanées d'un clavier ;
   ∘ des moyens de détection de la simple ou double page cible dudit chemin de fer qui se définit comme étant l'une desdites simple ou double pages en fonction de la détection du positionnement du curseur ou du positionnement dudit chemin de fer à l'écran ;
   ∘ des moyens d'exécution d'une animation simulant un zoom avant ou arrière composée d'une homothétie et/ou d'une translation dudit chemin de fer.

Grâce à l'invention, on utilise une navigation reproduisant une sensation de feuilletage d'une œuvre papier, un zoom progressif permettant de pointer où l'utilisateur souhaite lire tout en maintenant une qualité d'affichage optimale, et une présentation sous forme de grille de chaque page du document, offrant une vision globale et permettant de zoomer sur n'importe quelle page. Le principe de navigation repose sur ces vues reliées entre-elles par un système de transitions calculées en temps réel, le passage d'une vue à une autre étant transparent pour l'utilisateur. On a donc réellement la sensation de pouvoir se reculer ou s'avancer à volonté, à n'importe quel moment, sur n'importe quelle partie du document présenté

Le principal avantage de cette solution est de présenter une publication numérique de la manière la plus fidèle possible à son équivalent papier, permettant une navigation et une ergonomie tirant profit de la dématérialisation du document présenté pour créer de nouveaux usages de la lecture. Aucune solution existante ne propose une navigation unifiée permettant de lire, feuilleter et se repérer. L'invention est conçue pour permettre aux éditeurs et groupes de presse de diffuser une publication numérique sur n'importe quel écran, tout en fédérant une communauté de lecteurs autour de nouveaux usages de la lecture en numérique. L'utilisateur final de notre invention est donc le lecteur, quel qu'il soit, désirant consulter sur un écran n'importe quel document numérique.

On entend par passage une transition de type animation (définie par la composée d'une rotation et d'une translation variable dans le temps) lors du changement de la simple ou double page courante.

Le terminal selon l'invention peut également présenter une ou plusieurs des caractéristiques ci-dessous, considérées individuellement ou selon toutes les combinaisons techniquement possibles :
- lesdits moyens de commande comportent des moyens d'exécution d'une composée d'une homothétie de centre et de rapport variables et/ou d'une translation de vecteur variable dudit chemin de fer, ces variations étant dépendantes soit du positionnement du curseur, du sens et de l'amplitude du mouvement de molette, des dimensions et du positionnement dudit chemin de fer, soit du nombre de pressions successives ou du maintien de la pression d'une ou plusieurs touches simultanées du clavier, des dimensions et du positionnement dudit chemin de fer ;
- lesdits moyens de commande comportent des moyens de modification de l'animation simulant un zoom avant ou arrière composée d'une homothétie et/ou d'une translation dudit chemin de fer, permettant le recentrage progressif de ladite simple ou double page cible du chemin de fer à mesure que ses dimensions tendent vers les dimensions fixes desdites pages courantes de gauche et de droite de la vue feuilletage ;
- lesdits moyens de commande comportent des moyens d'affichage et de masquage desdits chemin de fer et vue de feuilletage, assurant une transition invisible pour l'utilisateur par superposition desdites simple ou double page cible et desdites pages courantes de gauche et de droite lorsque leurs dimensions et positions respectives sont identiques ;
- lesdits moyens de commande comportent des moyens de détection du changement de pages courantes par l'utilisateur dans ladite vue feuilletage, et de modification du positionnement dudit chemin de fer lorsque celui-ci est masqué, permettant la continuité des transitions invisibles pour l'utilisateur en superposant les nouvelles pages courantes de ladite vue feuilletage avec la double page correspondante dudit chemin de fer ;
- lesdits moyens de commande comportent :
   ∘ des moyens pour passer desdites pages courantes de gauche et de droite, dites respectivement pages N-1/N, aux pages suivantes dans la pile de droite, dites pages N+1/N+2, ou aux pages précédentes dans la pile de gauche, dites page N-3/N-2, en fonction de la détection du positionnement du curseur à la pression du bouton de souris, dite position initiale, et de la détection du positionnement du curseur au relâchement du bouton de souris, dite position finale, ou de la détection d'une pression de touche du clavier ;
   ∘ des moyens pour arrêter le passage desdites pages N-1/N aux pages suivantes, dites pages N+1/N+2, et revenir des pages suivantes, dites pages N+1/N+2, aux pages courantes, dites pages N-1/N ;
   ∘ des moyens pour arrêter le passage desdites pages N-1/N aux pages précédentes, dites pages N-3/N-2, et revenir des pages précédentes, dites pages N-3/N-2, aux pages courantes, dites pages N-1/N.

On entends par page cible, une page de la vue feuilletage qui se définit comme étant soit la page courante de gauche soit la page courante de droite en fonction du positionnement du curseur ou de la touche de clavier pressée.

### DESCRIPTION DETAILLEE DES FORMES DE REALISATION PRE-FEREES DE L'INVENTION

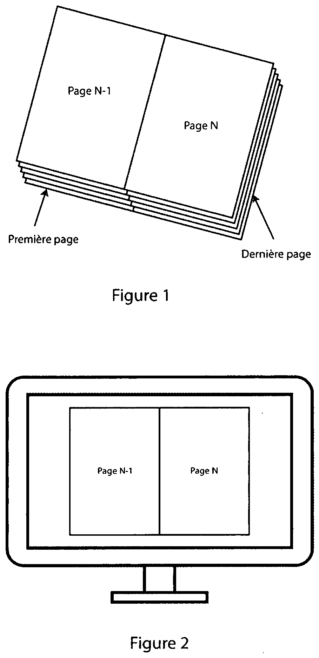

D'autres caractéristiques et avantages de l'invention ressortiront clairement de la description qui en est donnée ci-dessous, à titre indicatif et nullement limitatif, en référence aux figures 1 à 31 annexées.

Le terminal selon l'invention comporte plusieurs moyens logiciels (i.e. applications) dédiés à la mise en œuvre de l'invention.

Le terminal selon l'invention comporte 3 modes de présentation du même document sur un écran, chaque mode ayant une utilité différente pour répondre aux besoins du lecteur : feuilleter, lire, se repérer.

On distinguera ces modes de présentation selon le niveau de zoom appliqué aux objets graphiques représentant les pages du document : le mode « feuilletage » où le document est présenté avec un zoom de 100%, le mode « zoom » pour un niveau de zoom supérieur à 100%, et le mode « chemin de fer » pour un niveau de zoom inférieur à 100%. Au lancement de l'application, le mode de lecture par défaut est le mode feuilletage.

### Mode feuilletage

Le mode feuilletage propose à l'utilisateur une disposition des pages de la publication fidèle à l'aspect du document papier, composée de deux piles de pages côte à côte (figure 1).

La pile de gauche rassemble les pages précédentes classées en ordre ascendant, la pile de droite rassemble les pages suivantes classées en ordre descendant. La vue par défaut est donc une double page composée des deux pages N-1 et N au sommet de chaque pile (figure 2). Le principe de navigation est de faire tourner les pages d'une pile à l'autre pour simuler le feuilletage du document.

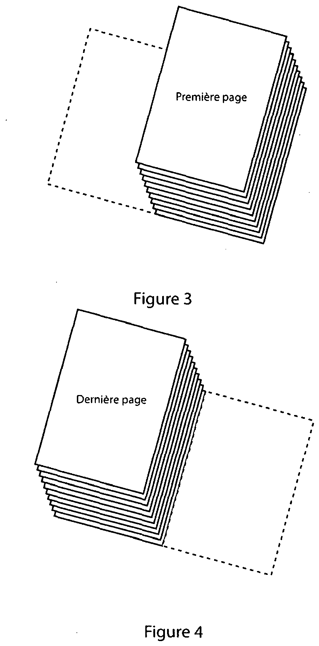

La présentation des pages est différente lorsqu'on est positionné sur la première page (figure 3) ou sur la dernière page du document (figure 4). L'une des piles étant obligatoirement vide, on n'a plus à l'écran qu'une seule page notifiant le commencement ou la fin du document.

### Principe de navigation

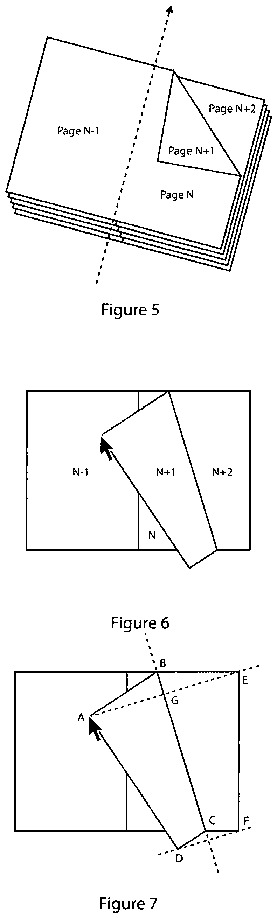

Le passage d'une double page à une autre se fait visuellement par l'intermédiaire d'une animation. Pour aller de la double page N-1/N à la double page suivante N+1/N+2, la page N/N+1 de droite se tourne progressivement vers la gauche, masquant son recto N et affichant son verso N+1 à mesure que la page s'écarte du bord droit (figure 5). La page N/N+1 tournée reste attachée par son bord gauche à l'axe central des doubles pages et vient se superposer à la pile de gauche une fois la page totalement tournée, recouvrant ainsi le verso N-1 de la page précédente.

En fin d'animation, la pile de gauche présente le verso N+1, la pile de droite présente le recto N+2 de la page suivante.

Pour aller à la double page précédente, l'animation est inversée symétriquement par rapport à l'axe central des doubles pages, en démarrant le mouvement de page de la pile de gauche pour aller vers la pile de droite. Pour la suite des explications le mouvement par défaut retenu est le passage à une page suivante, soit un tourner de page de la droite vers la gauche.

### Calcul de l'animation du tourner de page

L'affichage de la page en cours de mouvement est calculé en temps réel, donnant l'illusion de littéralement tirer un coin de page d'un côté vers l'autre du document ouvert (figures 6 et 7).

Partant de la position du curseur représentée par le point A, on évalue la distance parcourue par le coin de page depuis sa position initiale représentée par le point E. Traçant une ligne perpendiculaire au segment [AE] et le coupant en son milieu G, on obtient les intersections B et C avec les bords du document. Ce segment [BC] sert d'axe de symétrie pour définir le point D, c'est à dire le second coin de page initialement positionné au point F.

Les deux polygones [ABCD] et [BEFC] ainsi obtenus sont utilisés pour l'affichage de l'animation de la page N/N+1 tournée :
- Le polygone [BEFC] définit la partie masquée du recto N
- Le polygone [ABCD] définit la partie visible du verso N+1

### Animation simultanée de plusieurs pages (multipage)

L'animation du tourner de page est gérée par un objet graphique indépendant de la structure en piles des pages. Il est créé à la demande prenant comme paramètres le recto N et le verso N+1 de la page en cours, et est supprimé une fois l'animation terminée. C'est donc un objet dit de « transition » entre deux états, en l'occurrence entre l'affichage d'une double page N-1/N et la double page suivante N+1/N+2 (voir figure 6).

Cette dissociation entre affichage des pages et transition permet de générer plusieurs objets de transition en même temps, sans avoir besoin d'attendre la fin d'une animation pour en générer une suivante. Chaque objet de transition s'exécute de manière totalement indépendante.

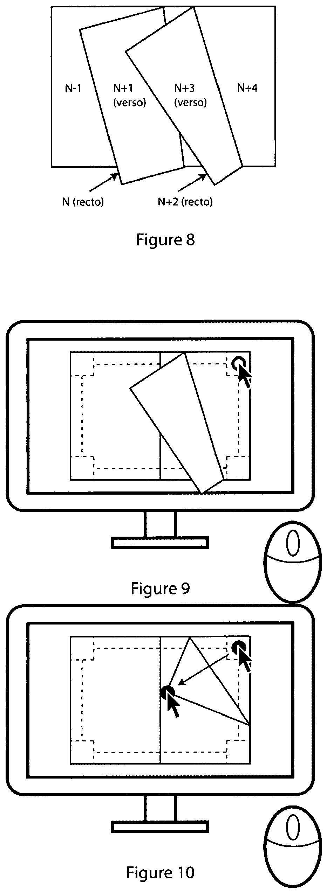

Durant la transition entre les doubles pages N-1/N et N+1/N+2, il est possible de générer une animation simultanée vers la double page N+3/N+4. En plus du premier objet de transition prenant comme paramètres le recto N et le verso N+1, un second objet de transition est alors généré prenant comme paramètres le recto N+2 et le verso N+3 (figure 8).

Ce principe de plusieurs animations de tourner de page en parallèle est appelé « multipage » et autorise un nombre infini d'objets de transition simultanés. Il est cependant limité à une valeur arbitraire (5 par défaut sur un ordinateur) calculée en corrélation avec la vitesse d'animation du tourner de page, ceci afin de préserver la fluidité de l'animation et le confort d'utilisation de l'application sur des terminaux à puissance de calcul réduite.

### Déclenchement et contrôle de l'animation

Le tourner de page peut être déclenché et contrôlé de plusieurs façons selon le périphérique de pointage utilisé, nous détaillerons ici l'utilisation de la souris (similaire à un périphérique tactile) et le cas échéant les touches du clavier d'un ordinateur.

Les doubles pages affichées possèdent des zones réactives invisibles pour l'utilisateur, permettant de restreindre l'interaction à une partie de la page. Ces zones recouvrent généralement les coins haut et bas ainsi que le côté externe de la page, mais leurs dimensions, formes et positions peuvent être modifiées si besoin.

L'utilisateur peut cliquer sur un coin ou bord de page pour déclencher une animation linéaire s'exécutant sans interruption (figure 9). Le déclenchement peut également se faire en appuyant sur les touches flèche gauche et/ou flèche droite du clavier.

L'utilisateur peut aussi tirer sur un coin de page pour en contrôler le mouvement et l'animation. Le coin de page suit les mouvements du curseur tant que l'utilisateur reste appuyé sur le bouton de la souris (figure 10).

Lorsque le bouton de la souris est relâché, l'application compare l'emplacement du curseur avec sa position initiale au début de l'animation du tourner de page.

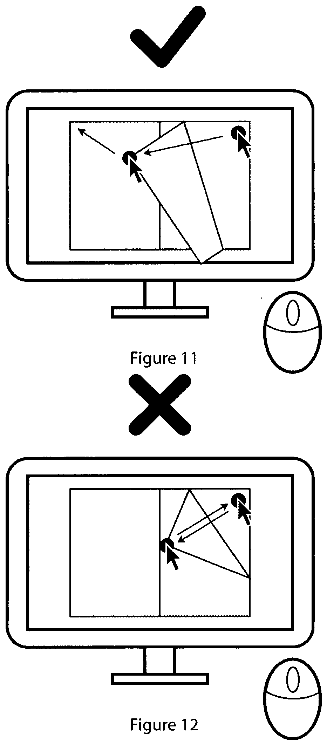

Si ces deux points sont de part et d'autre de l'axe central des doubles pages (figure 11), le changement de page est validé en poursuivant l'animation de façon linéaire.

Si les deux points sont du même côté de l'axe central des doubles pages (figure 12), le changement de page est annulé en exécutant une animation linéaire inverse ramenant la page tournée à son état précédent.

### Mode zoom

Dans le mode feuilletage, les pages affichées sont de dimensions fixes, calculées en fonction de la résolution de l'écran utilisé. Le but du mode zoom est de pouvoir agrandir la représentation des pages pour en lire le contenu avec plus de précision.

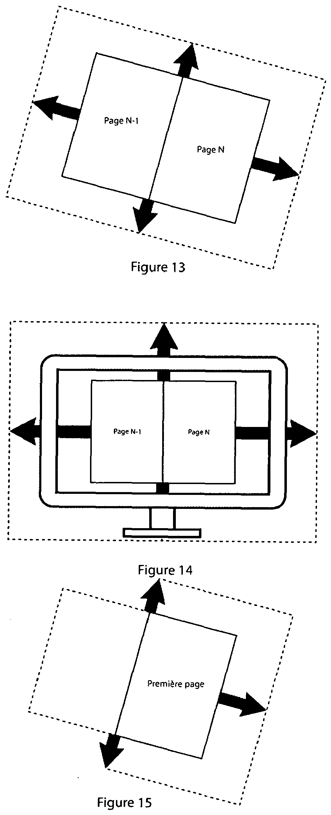

Le mode zoom reprend la présentation en double page du mode feuilletage, mais ne comporte que deux objets graphiques affichant des versions haute définition des pages N-1 et N du document (figures 13 et 14). La notion de piles d'objet n'a plus cours dans ce mode.

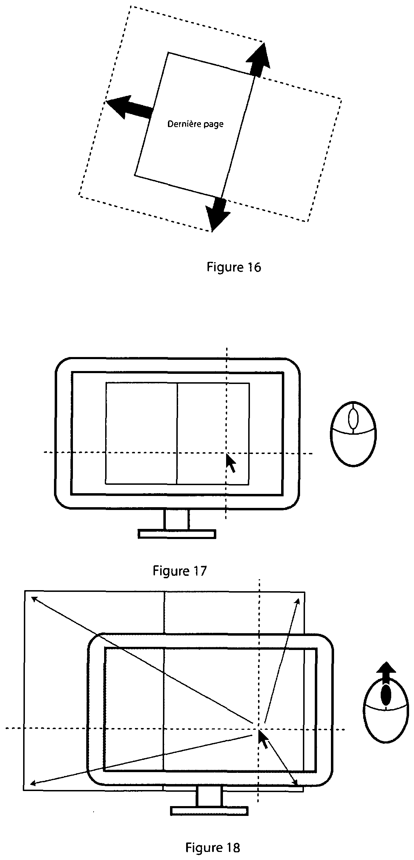

Comme pour le mode feuilletage, la présentation diffère lorsqu'on est positionné sur la première page (figure 15) ou dernière page (figure 16), une seule page étant alors visible.

### Navigation et manipulation du zoom

Le principe d'utilisation du mode zoom est d'effectuer des mouvements d'agrandissement, de rétrécissement et de translation d'une version haute définition de la double page en cours.

La manipulation peut se faire avec tout périphérique d'entrée, néanmoins l'utilisation d'un périphérique de pointage comme la souris ou une surface tactile permet d'exploiter la totalité des fonctions du mode zoom. Nous prendrons la souris comme exemple pour les explications suivantes.

La navigation se fait en dirigeant le curseur de la souris vers un point précis (figure 17), puis en faisant jouer la molette de la souris pour modifier le niveau de zoom, en avant ou en arrière selon le sens de rotation donné à la molette. Le nouveau niveau de zoom est calculé proportionnellement à la force ou au nombre de coups de molette.

Le zoom avant se traduit par une animation d'agrandissement de la double page, dont le centre homothétique est calé sur la position du curseur au déclenchement de l'événement (figure 18).

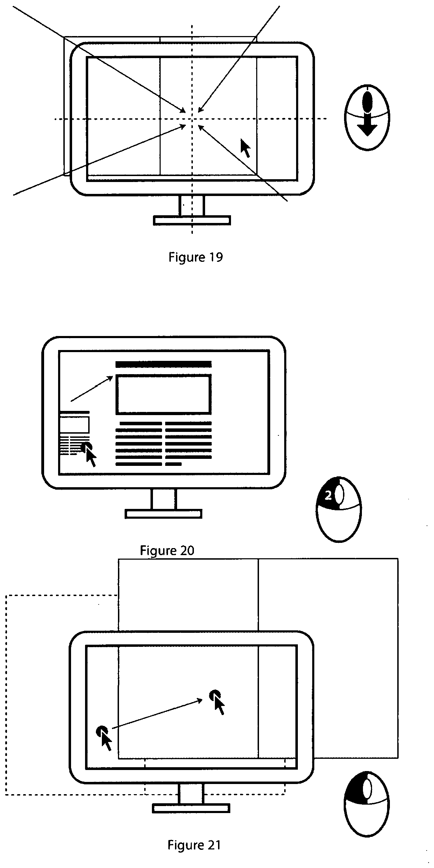

Le zoom arrière se traduit par une animation de rétrécissement de la double page, dont le centre homothétique est calé sur le centre de l'écran sans tenir compte la position du curseur (figure 19).

### Zooms prédéfinis

L'application propose plusieurs niveaux de zoom prédéfinis qui peuvent être déclenchés par un double clic. Ces niveaux de zoom peuvent être configurés différemment selon le document affiché pour adapter la navigation à son format et son contenu.

Le comportement par défaut du double-clic est d'effectuer un zoom avant vers le prochain niveau de zoom prédéfini ou jusqu'au niveau de zoom maximum autorisé, en utilisant le pointeur de la souris comme centre homothétique (voir figure 18).

Si le double-clic survient alors que le niveau de zoom maximum autorisé est déjà atteint, la double page est recalée sur sa position initiale avec une valeur de zoom de 100%.

Exemple de séquence : zoom 100% / zoom 200% / zoom 400%

Si le document d'origine fourni par l'éditeur le permet, il est possible d'utiliser le découpage des blocs de texte et objets graphiques des pages comme receveurs des événements de double-clic, créant de fait un maillage de zones réactives sur les pages.

Si un double-clic est effectué sur l'une de ces zones, le nouveau niveau de zoom et le centre homothétique de l'animation sont calculés pour afficher cette partie de la double page centrée à l'écran (figure 20). Si un deuxième double-clic est effectué consécutivement sur cette même zone, la double page revient au centre de l'écran avec une valeur de zoom de 100% comme à l'entrée du mode zoom.

### Déplacement et glisser de page

La double page peut être déplacée dans n'importe quelle direction (dans les limites de ses dimensions) en maintenant le bouton de la souris appuyé. Cela se traduit par une animation calculée en temps réel, la double page suivant les mouvements du curseur (figure 21).

Lorsque le bouton de la souris est relâché, le mouvement venant d'être effectué est analysé pour en définir la direction et la vitesse. En dessous d'une vitesse minimum, l'application considère que la page a été reposée et stoppe toute animation.

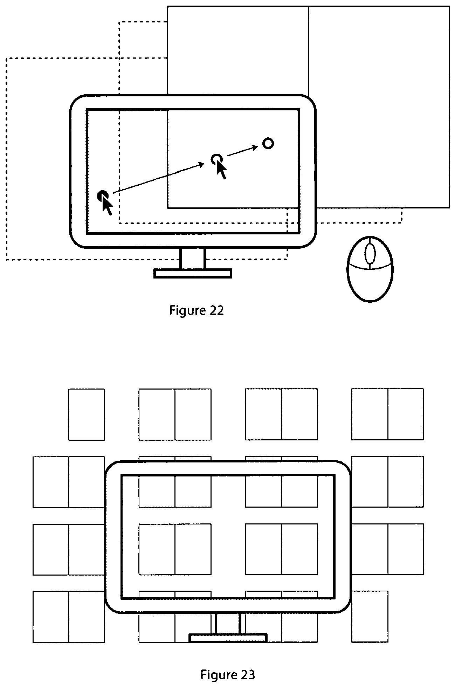

Si la vitesse dépasse un certain seuil, l'application considère que la page a été lancée, et poursuit dans la direction du mouvement analysé avec une animation de translation linéaire simulant un glissement et une décélération de la double page (figure 22).

### Affichage haute définition et fluidité des animations

Pour pouvoir zoomer sur les pages en conservant une lisibilité parfaite, il convient d'utiliser deux versions de chaque page :
- Une version basse définition, faite d'une seule image bitmap de la page aplatie, qui a l'avantage d'exécuter des animations fluides puisque composée d'un seul objet.
- Une version haute définition, conservant le format vectoriel de tout les objets qui la composent, et permettant un affichage net quelle que soit la résolution d'affichage.

La version haute définition est constituée d'énormément d'objets et ne permet pas des animations fluides, la version basse définition ne peut pas être agrandie sans perte de qualité. Le mode zoom utilise donc simultanément les deux versions des pages en les superposant, et en alternant l'affichage de l'une et de l'autre selon la navigation.

La version basse définition est visible à l'entrée du mode zoom à 100%, ainsi que pendant la durée d'une animation de zoom avant ou arrière pour conserver une fluidité de mouvements. La version haute définition est recalculée à chaque fois qu'une animation de zoom se termine, et affichée pardessus la version basse définition.

Pour pouvoir effectuer des animations de déplacement sans ralentissements, il est nécessaire de conserver en mémoire cache un aplatissement bitmap des pages haute définition tant que la résolution n'est pas modifiée de nouveau. Cette mise en cache intervient à la fin de l'animation de zoom, et est libérée dès qu'une nouvelle animation de zoom démarre.

### Mode chemin de fer

Le mode chemin de fer est constitué de l'ensemble des pages du document, présentées en doubles pages et disposées sous forme de grille, permettant une vision complète de l'ensemble du document (figure 23). On appellera « cellule » chaque élément de cette grille.

Une cellule comporte au minimum une double page (sauf première et dernière) et l'espacement nécessaire autour de la double page pour un affichage identique au mode feuilletage, c'est à dire centrée et seule à l'écran avec un zoom de 100%.

Le nombre de cellules de cette grille est déterminé à partir du nombre de pages du document, en tenant compte de la première et la dernière page devant être présentées à part. La répartition de ces cellules entre lignes et colonnes est déterminée par rapport au ratio hauteur / largeur de la fenêtre de l'application.

### Navigation et manipulation du chemin de fer

Le mode chemin de fer reprend le même principe de navigation que le mode zoom, permettant d'effectuer des mouvements d'agrandissement, de rétrécissement et de translation de la grille.

Le but recherché est cependant différent, le mode zoom étant utilisé pour lire avec précision et le mode chemin de fer pour une vision d'ensemble du document.

La manipulation peut se faire avec tout périphérique d'entrée, néanmoins l'utilisation d'un périphérique de pointage comme la souris ou une surface tactile permet d'exploiter la totalité des fonctions du mode chemin de fer. Nous prendrons la souris comme exemple pour les explications suivantes.

À l'entrée dans le mode chemin de fer, le niveau de zoom est de 100% et ne pourra être supérieur à cette valeur sans quitter le mode chemin de fer. La navigation se fait en utilisant la molette de la souris pour modifier le niveau de zoom, en avant ou en arrière selon le sens de rotation donné à la molette, le nouveau niveau de zoom étant calculé proportionnellement à la force ou au nombre de coups de molette.

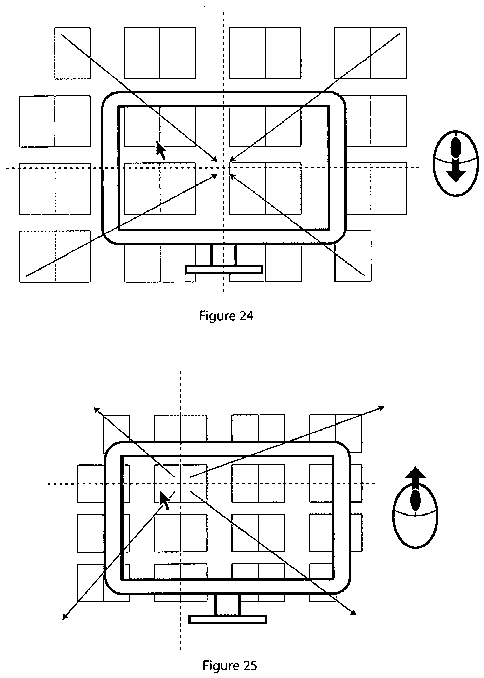

Comme dans le mode zoom, le zoom arrière se traduit par une animation de rétrécissement de la grille, dont le centre homothétique est calé sur le centre de l'écran sans tenir compte la position du curseur (figure 24).

Le zoom avant dans le mode chemin de fer est différent du mode zoom. Il se traduit par une animation d'agrandissement de la grille, dont le centre homothétique est calé sur le centre de la cellule au-dessus de laquelle est situé le curseur de la souris, ou à défaut du centre de la cellule la plus proche du curseur (figure 25).

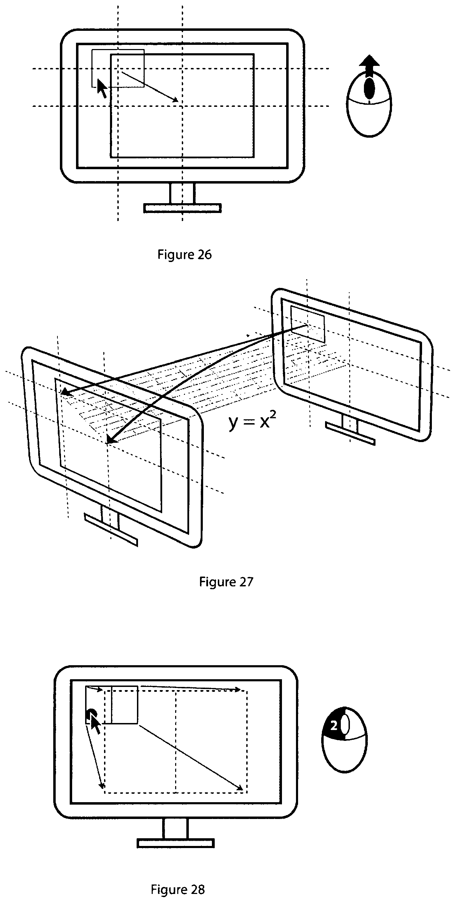

À cette homothétie s'ajoute une translation de la grille, définie par la droite allant du centre de la cellule visée au centre de l'écran (figure 26).

Le niveau de zoom au carré sert de facteur multiplicateur à cette translation : plus on s'approche de la valeur 100%, plus la translation est prononcée (figure 27).

La combinaison de ces deux animations dépendantes du niveau de zoom permet de donner une trajectoire courbe au zoom avant pour en optimiser l'affichage et l'ergonomie :
- À faible niveau de zoom, la double page visée reste proche du curseur de la souris pour éviter qu'en zoomant sur une page proche des bords de l'écran, celle-ci se décale trop rapidement vers le centre et ne soit plus sous le curseur.
- Le niveau de zoom augmentant, la double page s'écarte progressivement du curseur pour se rapprocher du centre de l'écran, ce qui permet de recentrer la double page dans un mouvement fluide si le niveau de zoom 100% est atteint.

### Zoom 100% prédéfini

L'application permet d'effectuer un zoom automatique sur une cellule, partant du niveau zoom en cours quel qu'il soit jusqu'au niveau de zoom de 100%. Ce zoom automatique est déclenché en positionnant le curseur de la souris au-dessus de la cellule visée puis en double-cliquant sur cette cellule (figure 28).

Comme pour tout zoom avant, l'animation d'agrandissement progressif de la grille jusqu'au niveau de zoom de 100% s'accompagne d'une translation définie par la droite allant du centre de la cellule visée au centre de l'écran (voir figure 26).

Cependant, cette translation s'effectue de manière linéaire sans utiliser le niveau de zoom au carré comme facteur multiplicateur, l'état d'arrivée de l'animation étant connu et inchangé jusqu'à son terme.

L'événement du double-clic ne peut entrainer qu'un seul type d'animation vers un zoom 100%, contrairement au cycle des valeurs de zoom progressif du mode zoom.

### Déplacement et glissement du chemin de fer

La manipulation du mode chemin de fer (hors commandes de zoom) reprend les mêmes principes et règles que le mode zoom : la grille peut être déplacée dans n'importe quelle direction (dans les limites de ses dimensions) en maintenant le bouton de la souris appuyé, et peut être reposée ou lancée en relâchant le bouton de la souris.

Les translations calculées sont identiques au mode zoom, se traduisant par l'accrochage de la grille au curseur de la souris, puis par un glissement et une décélération de la grille terminant le mouvement.

### Contraintes de positionnement

Les modes zoom et chemin de fer permettent de redimensionner ou déplacer les objets graphiques de façon libre, pouvant mener à un positionnement trop en dehors de l'écran.

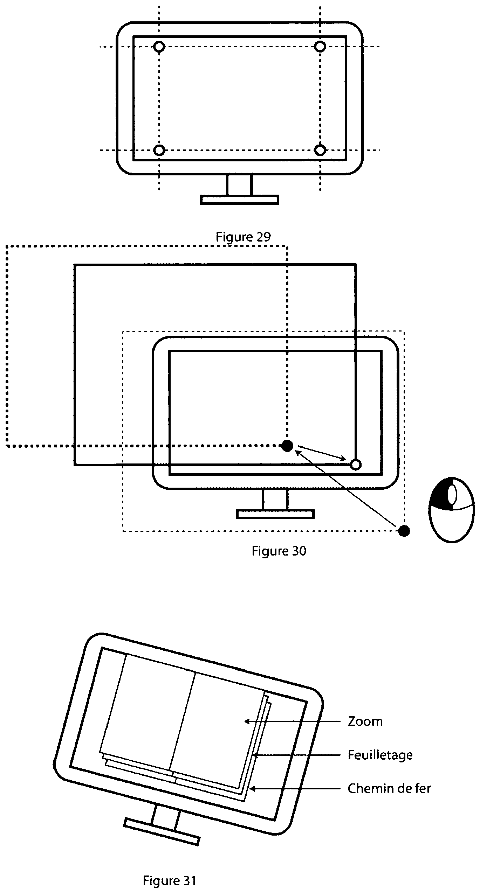

Pour l'éviter, les modes zoom et chemin de fer définissent des contraintes de positionnement de l'objet graphique principal, c'est à dire des coordonnées maxima affectées aux bords hauts, bas, gauches et droits (figure 29) et appliquées en temps réel.

Un dépassement des limites est autorisé tant que le bouton de la souris reste appuyé, la translation de l'objet graphique suivant le curseur étant divisée de moitié. Quand le bouton de la souris est relâché, les contraintes de positionnement sont appliquées par une animation de glissement (translation + décélération) ramenant l'objet graphique vers ses limites (figure 30).

Le mode feuilletage ne permet pas de redimensionner ou déplacer l'objet graphique de la double page à l'écran, et ne comporte donc pas de contraintes de positionnement.

### Transition entre deux modes

Tout l'intérêt de notre invention repose sur la complémentarité des trois modes de présentation. Le principe ergonomique est de pouvoir littéralement s'approcher très près ou prendre du recul avec une manipulation simple et intuitive, en alternant les modes selon le niveau de zoom. Il faut par conséquent que les changements de mode soient conçus pour être totalement transparents aux yeux de l'utilisateur.

### Principe de superposition

La disposition visuelle du mode feuilletage sert de base aux points d'entrée et de sortie des modes zoom et chemin de fer, la double page étant obligatoirement centrée à l'écran avec un niveau de zoom de 100%. Cette constante de disposition est assurée par les calculs d'animation de zoom expliqués précédemment, appliquant des règles nécessaires pour tendre vers un recentrage de l'objet graphique à mesure que le niveau de zoom se rapproche de 100%.

Les points d'entrée/sortie des modes zoom/chemin de fer étant visuellement identiques au mode feuilletage, les trois modes se superposent parfaitement pour assurer une transition invisible (figure 31).

Le mode feuilletage (niveau de zoom de 100%) constitue un passage obligé, il n'est pas possible de passer directement du mode zoom au mode chemin de fer, et inversement. Ce temps d'arrêt a un double intérêt :
- Permettre à l'utilisateur de revenir rapidement au mode feuilletage en donnant un coup de molette prononcé sans se soucier de sa précision.
- Laisser à l'application le délai nécessaire pour procéder au changement de mode.

### Mode feuilletage et mode zoom

Lorsqu'un niveau de zoom supérieur à 100% est demandé depuis le mode feuilletage, l'application initialise la vue du mode zoom en y dupliquant les versions basse définition de la double page en cours, et en lançant le chargement des versions haute définition de ces deux pages. Sans attendre la fin du chargement, la vue du mode zoom est affichée et la vue du mode feuilletage masquée.

Le mode zoom est alors pleinement actif, et l'animation d'agrandissement répondant à la commande initiale de zoom avant est exécutée. Une fois les versions haute définition chargées, le processus d'alternance expliqué précédemment entre ces deux versions se met en place.

Le fait de ramener le niveau de zoom à 100% équivaut à une sortie du mode zoom, qui s'exécute en affichant la vue du mode feuilletage puis en masquant la vue du mode zoom. Le mode feuilletage est alors pleinement actif, n'ayant pas subi de modification entretemps.

Le fait de ne pas décharger le mode zoom permet d'y revenir consécutivement sans repasser par la phase d'initialisation, les versions haute et basse définition des pages étant toujours présentes en mémoire.

### Mode feuilletage et mode chemin de fer

Lorsqu'un niveau de zoom inférieur à 100% est demandé depuis le mode feuilletage, l'application initialise la vue du mode chemin de fer en modifiant sa position, superposant la double page en cours du mode feuilletage avec la double page correspondante sur la grille. Cette modification de position se fait sans animation de manière immédiate.

La vue du mode chemin de fer est affichée et la vue du mode feuilletage masquée. Le mode chemin de fer est alors pleinement actif, et l'animation de rétrécissement répondant à la commande initiale de zoom arrière est exécutée.

Le fait de ramener le niveau de zoom à 100% équivaut à une sortie du mode chemin de fer.

L'application initialise alors la vue du mode feuilletage avec la double page précédemment visée dans la vue chemin de fer. Cette modification des piles de pages du mode feuilletage se fait sans animation de manière immédiate. La vue du mode feuilletage est alors affichée et la vue du chemin de fer masqué, terminant la transition entre les deux modes. Le mode feuilletage est alors pleinement actif, et l'utilisateur peut à nouveau tourner les pages.

## Revendications

1. Terminal fixe ou mobile apte à être piloté par un périphérique de pointage ou de saisie **caractérisé en ce qu'**il comporte
- des moyens de mémorisation sur lesquels une pluralité de pages est stockée ;
- des moyens d'affichage de la pluralité des pages stockées disposées sous la forme d'une grille dite chemin de fer, chaque élément dudit chemin de fer étant composé soit du recto ou du verso d'une page dite simple page, soit du recto d'une page et du verso d'une autre page accolés dits double page, l'ensemble desdits éléments étant ordonnés par défaut dans le sens ascendant des pages;
- des moyens d'affichage d'une vue dite feuilletage composée de deux piles de pages recto verso respectivement dites pile de gauche et pile de droite et ordonnées respectivement dans le sens ascendant et descendant, ou d'une seule pile contenant l'intégralité des pages recto verso, ordonnées dans le sens ascendant ou descendant, le tout appartenant à la pluralité des pages stockées ;
- des moyens de commande desdits moyens d'affichage comportant :
∘ des moyens de détection de l'interaction utilisateur au moyen d'une souris et/ou d'un clavier et/ou d'un périphérique tactile, comprenant la détection du positionnement et des mouvements d'un curseur, de la pression et du relâchement d'un bouton, du sens et de l'amplitude d'un mouvement de molette, et de la pression simple, maintenue ou répétée d'une ou plusieurs touches simultanées d'un clavier ;
∘ des moyens de détection de la simple ou double page cible dudit chemin de fer qui se définit comme étant l'une desdites simple ou double pages en fonction de la détection du positionnement du curseur ou du positionnement dudit chemin de fer à l'écran ;
∘ des moyens d'exécution d'une animation simulant un zoom avant ou arrière composée d'une homothétie et/ou d'une translation dudit chemin de fer ;
∘ des moyens de modification de l'animation simulant un zoom avant ou arrière composée d'une homothétie et/ou d'une translation dudit chemin de fer, permettant le recentrage progressif desdites simple ou double page cible du chemin de fer à mesure que leurs dimensions respectives tendent vers les dimensions fixes desdites pages courantes de gauche et de droite de la vue feuilletage ;
∘ des moyens d'affichage et de masquage desdits chemin de fer, et vue feuilletage, assurant une transition invisible pour l'utilisateur par superposition desdites simple ou double page cible et desdites pages courantes de gauche et de droite lorsque leurs dimensions et positions respectives sont identiques, au moyen d'une superposition de ladite simple ou double page cible du chemin de fer et lesdites pages courantes de gauche et de droite de la vue feuilletage,
∘ dans la transition, la disposition visuelle du mode feuilletage servant de base à des points d'entrée et de sortie du mode chemin de fer, la simple ou double page étant obligatoirement centrée à l'écran avec les dimensions fixes.

2. Terminal fixe ou mobile selon la revendication précédente **caractérisé en ce que** lesdits moyens de commande comportent des moyens de détection du changement de pages courantes par l'utilisateur dans ladite vue feuilletage, et de modification du positionnement dudit chemin de fer lorsque celui-ci est masqué, permettant la continuité des transitions invisibles pour l'utilisateur en superposant les nouvelles pages courantes de ladite vue feuilletage avec la double page correspondante dudit chemin de fer.

3. Terminal fixe ou mobile selon l'une des revendications précédentes **caractérisé en ce que** lesdits moyens de commande comportent des moyens d'exécution d'une composée d'une homothétie de centre et de rapport variables et/ou d'une translation de vecteur variable dudit chemin de fer, ces variations étant dépendantes soit du positionnement du curseur, du sens et de l'amplitude du mouvement de molette, des dimensions et du positionnement dudit chemin de fer, soit du nombre de pressions successives ou du maintien de la pression d'une ou plusieurs touches simultanées du clavier, des dimensions et du positionnement dudit chemin de fer.

4. Terminal fixe ou mobile selon l'une des revendications précédentes **caractérisé en ce que** lesdits moyens de commande comportent :
- des moyens pour passer desdites pages courantes de gauche et de droite, dites respectivement pages N-1/N, aux pages suivantes dans la pile de droite, dites pages N+1/N+2, ou aux pages précédentes dans la pile de gauche, dites page N-3/N-2, en fonction de la détection du positionnement du curseur à la pression du bouton de souris, dite position initiale, et de la détection du positionnement du curseur au relâchement du bouton de souris, dite position finale, ou de la détection d'une pression de touche du clavier ;
- des moyens pour arrêter le passage desdites pages N-1/N aux pages suivantes, dites pages N+1/N+2, et revenir des pages suivantes, dites pages N+1/N+2, aux pages courantes, dites pages N-1/N ;
- des moyens pour arrêter le passage desdites pages N-1/N aux pages précédentes, dites pages N-3/N-2, et revenir des pages précédentes, dites pages N-3/N-2, aux pages courantes, dites pages N-1/N.

## Patentansprüche

1. Festes oder mobiles Terminal, das geeignet ist, von einem Zeige- oder Eingabe-Peripheriegerät gesteuert zu sein, **dadurch gekennzeichnet, dass** es umfasst:
- Speichermittel, auf denen eine Vielzahl von Seiten gespeichert ist;
- Anzeigemittel der Vielzahl der gespeicherten Seiten, die in Form eines Gitters, genannt Eisenbahn, angeordnet sind, wobei jedes Element der genannten Eisenbahn sich entweder aus der genannten Vorderseite oder der Rückseite einer als einfache Seite bezeichneten Seite, d. h. der Vorderseite einer Seite und der Rückseite einer anderen Seite zusammensetzt, die aneinander angefügt sind, bezeichnet als doppelte Seite, wobei die Gruppe der genannten Elemente standardmäßig in der aufsteigenden Richtung der Seiten angeordnet ist:
- Anzeigemittel einer als Blättern bezeichneten Ansicht, die sich aus zwei Stapeln von Vorder- / Rückseiten, jeweils bezeichnet als linker Stapel und rechter Stapel und die jeweils in aufsteigender und absteigender Richtung angeordnet sind, oder aus einem einzigen Stapel, der alle Vorder- / Rückseiten enthält, zusammensetzt, die in der aufsteigender oder absteigenden Richtung angeordnet sind, wobei das Ganze zur Mehrzahl der gespeicherten Seiten gehört;
- Steuermittel der genannten Anzeigemittel, umfassend:
∘ Erkennungsmittel der Nutzerinteraktion mittels einer Maus und / oder einer Tastatur und / oder einem berührungssensitiven Peripheriegerät, umfassend das Erkennen der Positionierung und der Bewegungen eines Cursors, des Drucks und des Loslassens einer Taste, der Richtung und der Amplitude einer Rädchenbewegung und des einfachen Drucks, der durch eine oder mehrere Tasten einer Tastatur gleichzeitig gehalten oder wiederholt ist;
∘ Erkennungsmittel der einfachen oder doppelten Zielseite der genannten Eisenbahn, die als eine der genannten einfachen oder doppelten Seiten in Abhängigkeit von der Erkennung der Positionierung des Cursors oder der Positionierung der genannten Eisenbahn am Bildschirm definiert ist;
∘ Ausführungsmittel einer Animation, die einen vorderen oder hinteren Zoom simuliert, der aus einer Homothetie und / oder einer Translation der genannten Eisenbahn zusammengesetzt ist;
∘ Abänderungsmittel der Animation, die einen vorderen oder hinteren Zoom simuliert, der aus eine Homothetie und / oder einer Translation der genannten Eisenbahn zusammengesetzt ist und die allmähliche Neuorientierung der genannten einfachen oder doppelten Zielseite der Eisenbahn in dem Maße zulassen, wie ihre jeweiligen Abmessungen sich zu den festen Abmessungen der genannten laufenden Seiten links und rechts von der Blätternansicht erstrecken
∘ Anzeige- und Maskierungsmittel der genannten Eisenbahn und eine Blätternansicht, die einen unsichtbaren Übergang zum Nutzer per Überlagerung der genannten einfachen oder doppelten Zielseite und der genannten laufenden Seiten links und rechts, wenn ihre jeweiligen Abmessungen und Positionen identisch sind, mittels einer Überlagerung der genannten einfachen oder doppelten Zielseite der Eisenbahn und der genannten laufenden Seiten links und rechts der Blätternansicht gewährleisten;
∘ beim Übergang, wobei die visuelle Anordnung des Blätternmodus als Grundlage für die Eingangs- und Ausgangspunkte des Eisenbahnmodus dient, wobei die einfache oder doppelte Seite obligatorisch am Bildschirm mit den festen Abmessungen zentriert ist.

2. Festes oder mobiles Terminal gemäß dem voranstehenden Anspruch, **dadurch gekennzeichnet, dass** die genannten Steuermittel Erkennungsmittel der Änderung von laufenden Seiten durch den Nutzer in der genannten Blätternansicht und zur Änderung der Positionierung der genannten Eisenbahn umfassen, wenn diese maskiert ist, die das Fortsetzen der unsichtbaren Übergänge für den Nutzer durch Überlagern der neuen laufenden Seiten der genannten Blätternansicht mit der entsprechenden doppelten Seite der genannten Eisenbahn erlauben.

3. Festes oder mobiles Terminal gemäß einem der voranstehenden Ansprüche, **dadurch gekennzeichnet, dass** die genannten Steuermittel Ausführungsmittel einer Zusammensetzung eines variablen Zentrums und Verhältnisses und / oder einer variablen Vektortranslation der genannten Eisenbahn umfassen, wobei diese Variationen entweder von der Positionierung des Cursors, der Richtung und der Amplitude der Rädchenbewegung, den Abmessungen und der Positionierung der genannten Eisenbahn oder von der Anzahl von aufeinanderfolgenden Drücken oder dem Halten des Drucks von einer oder mehreren gleichzeitigen Drücken der Tastatur, den Abmessungen und der Positionierung der genannten Eisenbahn abhängen.

4. Festes oder mobiles Terminal gemäß einem der voranstehenden Ansprüche, **dadurch gekennzeichnet, dass** die genannten Steuermittel umfassen:
- Mittel zum Übergehen der genannten aktuellen Seiten links und rechts, jeweils bezeichnet als Seiten N-1/N, zu den folgenden Seiten in dem rechten Stapel, bezeichnet als Seiten N+1/N+2, oder zu den voranstehenden Seiten in dem linken Stapel, bezeichnet als Seite N-3/N-2 in Abhängigkeit von dem Erkennen der Positionierung des Cursors auf den Druck der Maustaste, bezeichnet als ursprüngliche Position, und das Erkennen der Positionierung des Cursors beim Loslassen der Maustaste, bezeichnet als endgültige Position, oder dem Erkennen eines Tastendrucks der Tastatur;
- Mittel zum Stoppen des Übergehens der genannten Seiten N-1/N zu den folgenden Seiten, bezeichnet als Seiten N+1/N+2 und Zurückkehren der folgenden Seiten, der genannten Seiten N+1/N+2, zu den laufenden Seiten, bezeichnet als Seiten N-1/N;
- Mittel zum Stoppen des Übergehens der genannten Seiten N-1/N zu den voranstehenden Seiten, bezeichnet als Seiten N-3/N-2 und Zurückkehren der voranstehenden Seiten, bezeichnet als N-3/N-2, zu den laufenden Seiten, bezeichnet als Seiten N-1/N.

## Claims

1. A fixed or mobile terminal able to be driven by a pointing or input peripheral, **characterised in that** it includes
- memory means on which a plurality of pages are stored;
- means for displaying the plurality of stored pages disposed as a grid referred to as a thumbnail view, each element of said thumbnail being comprised either of the front side or reverse side of a page, referred to as a single page spread, or of the front side of a page and the reverse side of another page placed side by side referred to as a double-page spread, all these elements being ordered by default in the ascending direction of the pages;
- means for displaying a view referred to as the leafing view composed of two stacks of front and reverse side pages respectively referred to as the left stack and right stack and respectively ordered in the ascending or descending direction, or of a single stack containing the totality of the front and reverse side pages, ordered in the ascending or descending direction, the whole belonging to the plurality of stored pages;
- means for controlling said displaying means including:
∘ means for detecting the user interaction by means of a mouse and/or a keyboard and/or a touch peripheral, comprising the detection of the position and movements of a curser, the depression and release of a button, the direction and amplitude of a scroll wheel movement, and the simple, maintained or repeated depression of one or more simultaneous keys of a keyboard;
∘ means for detecting the simple or double-page spread target of said thumbnail which is defined as being one of said single or double-page spreads depending on the detection of the cursor positioning or the positioning of said thumbnail on the screen;
∘ means for executing an animation simulating a zoom-in or zoom-out comprised of a homothety and/or translation of said thumbnail;
∘ means for modifying the animation simulating a zoom-in or zoom-out comprised of a homothety and/or translation of said thumbnail, enabling the progressive refocusing of said single or double-page spreads target of the thumbnail as their respective dimensions tend towards fixed dimensions of said left or right current pages of the leafing view;
∘ means for displaying and masking said thumbnail and leafing view, ensuring an invisible transition for the user by superimposing said single or double-page spreads target and said left and right current pages when their respective dimensions and positions are identical, by means of superimposing said single or double-page spread target of the thumbnail and said left and right current pages of the leafing view,
∘ in the transition, the visual disposition of the leafing mode acting as a base for input/output points from the thumbnail mode, the single or double-page being necessarily centred on the screen with the fixed dimensions.

2. The fixed or mobile terminal according to the previous claim, **characterised in that** said control means include means for detecting the change in current pages by the user in said leafing view, and for modifying the positioning of said thumbnail when the same is masked, allowing continuity of the invisible transitions for the user by superimposing the new current pages of said leafing view with the corresponding double-page spread of said thumbnail.

3. The fixed or mobile terminal according to one of the previous claims, **characterised in that** said control means include means for executing a composite of a homothety of variable centre and ratio and/or a variable vector translation of said thumbnail, these variations depending either on the cursor positioning, the direction and amplitude of the scroll wheel movement, the dimensions and positioning of said thumbnail, or on the number of successive depressions or depression maintenance on one or more simultaneous keys of the keyboard, the dimensions and positioning of said thumbnail.

4. The fixed or mobile terminal according to one of the previous claims, **characterised in that** said control means include:
- means for passing from said left and right current pages, respectively referred to as pages N-1/N, to the next pages in the right stack, referred to as pages N+1/N+2, or to the previous pages in the left stack, referred to as pages N-3/N-2, depending on the detection of the cursor positioning upon depressing the mouse button, referred to as the initial position, and of detecting the cursor positioning upon releasing the mouse button, referred to as the final position, or of detecting a depression of a keyboard key;
- means for stopping passing from said pages N-1/N to the next pages, referred to as pages N+1/N+2, and going back from the next pages, referred to as pages N+1/N+2, to the current pages, referred to as pages N-1/N;
- means for stopping passing from said pages N-1/N to the previous pages, referred to as pages N-3/N-2, and going back from the previous pages, referred to as pages N-3/N-2, to the current pages, referred to as pages N-1/N.
